# EUROPEAN PATENT APPLICATION

(11) **EP 4 245 482 A1**
(43) Date of publication of application: **20.09.2023**
(21) Application number: 22787395.7
(22) Date of filing: 01.04.2022
(51) Int. Cl.: B25J 15/00

(54) **END EFFECTOR, MANIPULATOR, AND ROBOT**

(30) Priority: 15.04.2021 CN 202110406383
(71) Applicant: Beijing Jingdong Qianshi Technology Co., Ltd., Beijing 100176 (CN)
(72) Inventor: ZHANG, Jian, Beijing 100176 (CN); SONG, Guoku, Beijing 100176 (CN); TANG, Jingren, Beijing 100176 (CN)
(74) Representative: Prüfer & Partner mbB Patentanwälte · Rechtsanwälte
(86) International application number: PCT/CN2022/084749
(87) International publication number: WO 2022/218168

(57) **Abstract**

The present application relates to the field of handling apparatus technologies, in particular to an end pickup device, a manipulator and a robot. The end pickup device includes: a mounting seat, a pickup mechanism and a driving mechanism. The pickup mechanism is disposed on the mounting seat and includes at least two pickup apparatuses are movable relative to each other, and the pickup apparatus includes a pickup part for picking up articles. The driving mechanism is disposed on the mounting seat and is in driving connection with the pickup mechanism, and the driving mechanism drives the at least two pickup apparatuses to move relatively, so that the at least two pickup apparatuses pick up the articles in a switching way. Based on this, the replacement time of the pickup parts can be shortened and the working efficiency of the end pickup device can be improved.

## Description

### Cross-Reference to Related Applications

The present application is based on and claims priority to Chinese Application No. 202110406383.2, filed on April 15, 2021, which is hereby incorporated by reference in its entirety.

### Field of the Invention

The present application relates to the field of handling apparatus technologies, in particular to an end pickup device, a manipulator and a robot.

### Background of the Invention

An end pickup device is an important part of a manipulator, and picks up articles with a pickup part, so as to transport the articles from one position to a designated position.

In order to meet various pickup requirements of different articles, the end pickup device needs to replace different pickup parts. In related art, the end pickup device needs to move between a working region and other regions to realize replacement of the pickup parts, which takes a lot of time for replacing the pickup parts and affects working efficiency.

### Summary of the Invention

A technical problem to be solved in the present application is to improve the working efficiency of an end pickup device.

In order to solve the above technical problem, the present application provides an end pickup device, including:
a mounting seat;
a pickup mechanism disposed on the mounting seat and including at least two pickup apparatuses, wherein the at least two pickup apparatuses are movable relative to each other,
and the pickup apparatus includes a pickup part for picking up articles; and
a driving mechanism disposed on the mounting seat and in driving connection with the pickup mechanism, wherein the driving mechanism drives the at least two pickup apparatuses to move relatively, so that the at least two pickup apparatuses pick up the articles in a switching way.

In some embodiments, the pickup apparatus further includes a sleeve, the pickup part is disposed at an end part of the sleeve, the at least two pickup apparatuses are disposed in a sequentially sleeving way and are relatively telescopic, and the driving mechanism drives the at least two pickup apparatuses to extend and retract relatively, so that the at least two pickup apparatuses pick up the articles in a switching way.

In some embodiments, the at least two pickup apparatuses include a first pickup apparatus and at least one second pickup device, the first pickup apparatus is fixedly disposed, the at least one second pickup apparatus sleeves outside the first pickup apparatus and is telescopic relative to the first pickup device, and the driving mechanism is in driving connection with the at least one second pickup apparatus and drives the at least one second pickup apparatus to extend and retract, so that the at least one second pickup apparatus and the first pickup apparatus pick up the articles in a switching way.

In some embodiments, the at least two pickup apparatuses include at least two second pickup apparatuses.

In some embodiments, the driving mechanism includes a driving device corresponding to the at least one second pickup apparatus one to one, and the driving device is in driving connection with the second pickup apparatus to drive the second pickup apparatus to extend and retract.

In some embodiments, the driving device includes a lead screw motor, and the lead screw motor is in driving connection with the second pickup device.

In some embodiments, the driving device further includes a nut seat, and the nut seat connects a nut of the lead screw motor with the sleeve of the second pickup apparatus to realize driving connection between the lead screw motor and the second pickup device.

In some embodiments, the nut seat includes a first connecting part and a second connecting part which are connected with each other, the first connecting part and the sleeve are connected through a first pin shaft, or the first connecting part and the sleeve are connected in a clamping way; and/or the second connecting part and the nut are connected through a second pin shaft.

In some embodiments, a first cavity is disposed in the first connecting part, the sleeve is located in the first cavity, and the first connecting part and the sleeve are connected through the first pin shaft; or, the first connecting part includes a clamping part, a clamping groove is disposed in a side wall of the sleeve, the clamping part is clamped in the clamping groove, a displacement of the clamping part towards a radial outer side of the sleeve and along an axial direction of the sleeve is limited by the clamping groove, and the second pin shaft connecting the second connecting part with the nut abuts against an outer wall of the sleeve to limit a displacement of the nut seat towards a radial inner side of the sleeve.

In some embodiments, a side wall of the first cavity is provided with a first hole part, the outer wall of the sleeve is provided with a second hole part, the first hole part and the second hole part are butted to form a closed first pin hole, the second connecting part is provided with a first through hole communicated with the first pin hole, and the first pin shaft penetrates the first through hole and is inserted into the first pin hole to connect the sleeve with the first connecting part.

In some embodiments, a second cavity is disposed in the second connecting part, the nut is located in the second cavity, and the second connecting part and the nut are connected through the second pin shaft.

In some embodiments, a side wall of the second cavity is provided with a third hole part, an outer wall of the nut is provided with a fourth hole part, the third hole part and the fourth hole part are butted to form a closed second pin hole, the second connecting part is provided with a second through hole communicated with the second pin hole, and the second pin shaft penetrates the second through hole and is inserted into the second pin hole to connect the nut with the second connecting part.

In some embodiments, in the two pickup apparatuses which are adjacent to each other and are both telescopic, the sleeve of the pickup apparatus located outside is provided with an avoidance opening to avoid the extending and retracting of the pickup apparatus located inside.

In some embodiments, the end pickup device further includes a limiting device, disposed on the mounting seat and limiting a displacement of the pickup device.

In some embodiments, the limiting device includes a first limiting switch and a second limiting switch, the first limiting switch and the second limiting switch are sequentially disposed along an extending direction of the pickup device, the first limiting switch limits a retracting displacement of the pickup device, and the second limiting switch limits an extending displacement of the pickup device.

In some embodiments, the pickup part includes a suction cup.

The present application further provides a manipulator, including the end pickup device according to the embodiments of the present application.

The present application further provides a robot, including the manipulator according to the embodiments of the present application.

In the embodiments of the present application, based on cooperation of the driving mechanism and the at least two pickup apparatuses, the end pickup device can replace the pickup parts locally in a working region, without moving between the working region and other regions, thereby saving time and improving the working efficiency.

Other features and advantages of the present application will become apparent through the following detailed descriptions of exemplary embodiments of the present application with reference to the accompanying drawings.

### Brief Description of the Drawings

In order to describe the technical solutions in the embodiments of the present application or the prior art more clearly, the following briefly introduces the accompanying drawings required for describing the embodiments or the prior art. Apparently, the accompanying drawings in the following descriptions are merely some embodiments of the present application, and those ordinary skilled in the art can also derive other accompanying drawings from these accompanying drawings without creative efforts.
Fig. 1 is a schematic diagram of a state when an end pickup device performs placing in a working region in the related art.
Fig. 2 is a schematic diagram of a state when an end pickup device moves to a suction cup holder to put down an existing suction cup in the related art.
Fig. 3 is a schematic diagram of a state when an end pickup device replaces a required suction cup in the related art.
Fig. 4 is a schematic diagram of a state of an end pickup device returning to a working region in the related art.
Fig. 5 is a schematic flow chart of switching a suction cup by an end pickup device in the related art.
Fig. 6 is a schematic flow chart of switching a suction cup by an end pickup device in an embodiment of the present application.
Fig. 7 is a schematic structural diagram of an end pickup device in an embodiment of the present application.
Fig. 8 is a schematic diagram of a state when a third-stage pickup apparatus of an end pickup device retracts in an embodiment of the present application.
Fig. 9 is a schematic diagram of a state when a second-stage pickup apparatus of an end pickup device retracts in an embodiment of the present application.
Fig. 10 shows a cooperation relationship of three stages of pickup apparatus in an embodiment of the present application.
Fig. 11 shows a cooperation relationship between a driving mechanism and a pickup mechanism in an embodiment of the present application.
Fig. 12 is an explosive schematic diagram of a combined structure of a nut seat, a nut and a sleeve of a second-stage pickup apparatus in an embodiment of the present application.
Fig. 13 shows a cooperation relationship of a nut seat, a nut and a sleeve of a second-stage pickup apparatus in an embodiment of the present application.
Fig. 14 shows a schematic diagram of a combined structure of a nut seat, a nut and a sleeve of a third-stage pickup apparatus in an embodiment of the present application.
Fig. 15 shows an explosive schematic diagram of Fig. 14.
Fig. 16 shows a cooperation relationship of the nut seat, the nut and the sleeve of the third-stage pickup apparatus in Fig. 14.
Fig. 17 shows a schematic arrangement diagram of a limiting device in an embodiment of the present application.
Fig. 18 shows a cooperation relationship between a limiting device and a driving device corresponding to a third-stage pickup apparatus in an embodiment of the present application.
Fig. 19 shows a cooperation relationship between a limiting device and a driving device corresponding to a second-stage pickup apparatus in an embodiment of the present application.
Fig. 20 shows a schematic diagram of a state when a second limiting switch is not triggered in an embodiment of the present application.
Fig. 21 shows a schematic diagram of a state when a second limiting switch is triggered in an embodiment of the present application.

### Detailed Description of the Embodiments

The technical solutions in the embodiments of the present application will be clearly and completely described below in combination with the accompanying drawings in the embodiments of the present application. Obviously, the described embodiments are only a part but not all of the embodiments of the present application. The following description of at least one exemplary embodiment is merely illustrative in nature and is not intended to limit the disclosure, its application or uses in any way. Based on the embodiments in the present application, all other embodiments obtained by those ordinary skilled in the art without creative work are within the protection scope of the present application.

Technologies, methods, and apparatuses known to those ordinary skilled in the relevant art may not be discussed in detail, but when appropriate, the technologies, methods, and apparatuses should be considered part of the description.

In the descriptions of the present application, it should be understood that the orientation or positional relationships indicated by the directional terms such as "front, rear, upper, lower, left, right", "transverse, vertical, perpendicular, horizontal", and "top, bottom" are based on the orientation or positional relationships shown in the drawings, only for the purposes of the ease in describing the present application and simplification of its descriptions, but not, unless stated otherwise, indicating or implying that the specified device or element has to be specifically located, and structured and operated in a specific direction and therefore, should not be understood as limitations to the protective scope of present application; and the directional terms "inside and outside" refer to the inside and outside relative to the outline of each component itself.

In the descriptions of the present application, it should be understood that the use of the terms such as "first" and "second" to define the components is only for the convenience of distinguishing corresponding components. Unless otherwise stated, the above terms have no special meaning, and therefore, should not be understood as limitations to the protective scope of the present application.

In addition, the technical features involved in different implementations of the present application described below can be combined with each other as long as they do not conflict with each other.

An end pickup device is a grabbing device, and is usually connected to the tail end of a manipulator for grabbing articles. In the field of logistics, robots are often used to pick up goods through the end pickup device to realize selection of the goods.

The end pickup device includes a pickup part, and the pickup part is in contact with the article, and picks up the articles by means of clamping and grabbing, vacuum adsorption or magnetic adsorption, etc.

In order to meet the pickup requirements of different articles, the end pickup device needs to replace different pickup parts. The process of replacing the pickup part is actually an ineffective operation. Therefore, it is hoped to reduce the time occupied by the replacement process of the pickup parts and increase the time occupied by the pickup operation.

However, in the related art, the end pickup device needs to move between a working region and a replacement region far away from the working region to realize the replacement of the pickup parts, which consumes a lot of time and affects the working efficiency.

Here, by taking the vacuum adsorption-type end pickup device as an example, the replacement process of the pickup parts in the related art is explained.

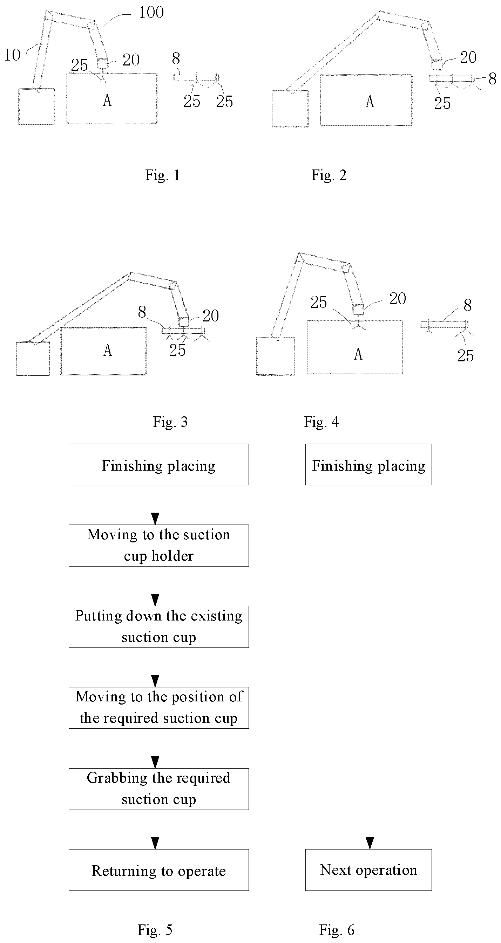

Figs. 1-5 show a replacement process of the pickup parts of the vacuum adsorption-type end pickup device in the related art.

Referring to Fig. 1, when an end pickup device 20 disposed at the end part of a manipulator 10 is a vacuum adsorption-type end pickup device, the pickup part of the end pickup device 20 is a suction cup 25, and the end pickup device 20 is in contact with the articles through the suction cup 25 to pick up the articles.

In order to replace the suction cups 25, referring to Figs. 1-5, in the related art, the end pickup device 20 is provided with a quick-change mechanism (not shown in the figures), a suction cup holder 8 is specially disposed outside the working region A, and backup suction cups 25 are disposed on the suction cup holder 8 for the end pickup device 20 to replace. In this case, the region where the suction cup holder 8 is located is a replacement region, and the replacement region needs not to affect normal proceeding of the grabbing and placing operation, and is thus generally far away from the working region A.

When the existing suction cup 25 does not meet pickup requirements of the articles and needs to be replaced, as shown in Figs. 1-2, after the existing suction cup 25 finishes placing the article, the end pickup device 20 needs to move from the working region A to the replacement region which the suction cup holder 8 is located at and is far away from the working region A, and then the existing suction cup 25 is released by the quick-change mechanism. Then, as shown in Fig. 3, the end pickup device 20 is controlled to move to the position where the required suction cup 25 is located in the replacement region, and the required suction cup 25 is grabbed by the quick-change mechanism. Then, as shown in Fig. 4, the end pickup device 20 is controlled to return to the working region A from the replacement region for the next operation.

As can be seen, referring to Fig. 5, in the related art, many links, such as " finishing placing -moving to the suction cup holder-putting down the existing suction cup-moving to the position of the required suction cup-grabbing the required suction cup-returning to operate" are required to complete the replacement of the suction cups and pick up another article.

In the above replacement process, actions corresponding to "moving to the suction cup holder-putting down the existing suction cup-moving to the position of the required suction cup-grabbing the required suction cup", which are all prepared for the next pickup operation, are actually ineffective operations, and the time consumed for moving the manipulator and the time consumed for replacing the suction cups by the quick-change mechanism are ineffective time, which account for a large proportion in the whole replacement process, and affects the working efficiency.

In view of the aforementioned cases, the embodiments of the present application improve the structure of the end pickup device to shorten the replacement time of the pickup parts and improve the working efficiency.

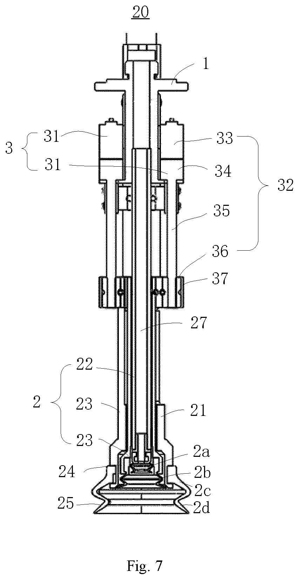

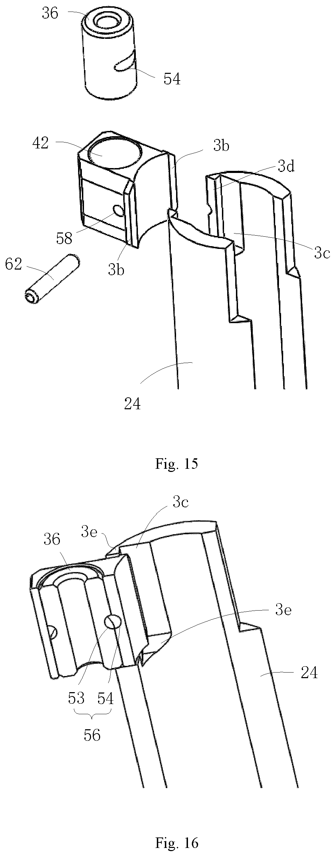

Figs. 7-21 schematically show the structure of the end pickup device according to the present application.

Referring to Figs. 7-21, in some embodiments of the present application, the end pickup device 20 includes:
a mounting seat 1;
a pickup mechanism 2, disposed on the mounting seat 1 and including at least two pickup apparatuses 21 which can move relatively, the pickup apparatus 21 including a pickup part 2d for picking up articles; and
a driving mechanism 3, disposed on the mounting seat 1 and in driving connection with the pickup mechanism 2, the driving mechanism 3 driving the at least two pickup apparatuses 21 to move relatively, so that the at least two pickup apparatuses 21 pick up the articles in a switching way.

It can be understood that picking up the articles in a switching way means that when one pickup part 2d picks up the articles, other pickup parts 2d do not pick up the articles, and the pickup parts 2d perform the pickup task one by one.

Based on the above arrangement, the end pickup device 20 no longer includes only one pickup part 2d, but includes at least two pickup parts 2d, and the pickup parts 2d are driven by the driving mechanism 3 to move relatively to pick up the articles in a switching way. In this way, the replacement of the pickup parts 2d can be completed on the end pickup device 20 itself, that is to say, the end pickup device 20 can complete the replacement of the pickup parts 2d locally in the working region. Since there is no need to move the end pickup device 20 between the working region and other regions, the replacement time of the pickup parts is shortened, so that the end pickup device 20 can pick up more articles, thereby effectively improving the working efficiency.

The working flow of the end pickup device 20 according to the embodiments of the present application is shown in Fig. 6. As can be seen from Fig. 6, in the embodiments of the present application, the end pickup device 20 does not need to move between the working region A and the replacement region as a whole after the placing ends, but can directly complete the replacement of the pickup parts 2d in the working region and quickly move on to the next operation.

In comparison with Fig. 5 and Fig. 6, it can be known that the embodiments of the present application can omit several links of "moving to the suction cup holder-putting down the existing suction cup-moving to the position of the required suction cup-grabbing the required suction cup" in the related art, eliminate the actions and moving processes corresponding to these links, and save the ineffective time for the end pickup device 20 to specially go to the replacement region to put down and replace the pickup parts 2d, and then return to the working region A. Therefore, the replacement time of the pickup parts is effectively shortened, quick replacement of the pickup parts is realized, and the efficiency is significantly improved.

Forms of relative movement between the pickup apparatuses 21 may be varied. As one of the forms, the pickup apparatuses 21 are relatively telescopic. For example, referring to Figs. 7-10, in some embodiments, the pickup apparatus 21 further includes a sleeve 24, and the pickup part 2d is disposed at the end part of the sleeve 24. The aforementioned at least two pickup apparatuses 21 are disposed in a sequentially sleeving way and are relatively telescopic, and the driving mechanism 3 drives the at least two pickup apparatuses 21 to extend and retract relatively, so that the at least two pickup apparatuses 21 pick up the articles in a switching way.

In the above arrangement, the replacement of the pickup parts 2d is realized by relative extension and retraction of the pickup apparatuses 21. When a certain pickup part 2d needs to work, the pickup apparatuses 21 outside the pickup part 2d are driven to retract to expose the pickup part 2d, so that the pickup part 2d is in contact with the article, and the pickup function can be realized. When other external pickup parts 2d need to be replaced for work after the current pickup part 2d complete working, the required pickup part 2d is driven to extend to be in contact with the article to perform the pickup task. In this way, based on relative extension and retraction of the pickup apparatuses 21, the quick replacement of the pickup parts 2d is completed, so that the pickup apparatuses 21 perform the pickup task in a switching way.

Since a sleeving way is adopted, specifications of the outer pickup parts 2d are larger than those of the inner pickup parts 2d in all the pickup apparatuses 21. In this case, when the pickup parts 2d are replaced by the relative extension and retraction of the pickup apparatuses 21, the pickup parts 2d of different specifications are replaced, such that pickup requirements of the articles of different specifications are met. For example, when the article to be picked up is larger, the outer pickup apparatus 21 is driven to extend to provide a larger pickup force; when the article to be picked up is smaller and the larger pickup part 2d cannot effectively pick up the article, the outer pickup apparatus 21 is driven to retract, so that the inner pickup apparatus 21 is exposed to pick up the smaller article.

In the case that the pickup apparatuses 21 are disposed in a mutually sleeving way, each pickup apparatus 21 may be called one stage of pickup device, and all pickup apparatuses 21 may be respectively called a first-stage pickup apparatus 2a, a second-stage pickup apparatus 2b, a third-stage pickup apparatus 2c and so on from inside to outside. Accordingly, the pickup parts 2d of the pickup apparatuses 21 may be respectively called a first-stage pickup part, a second-stage pickup part, a third-stage pickup part and so on from inside to outside. The sleeves 24 of the pickup apparatuses 21 may be respectively called a first-stage sleeve, a second-stage sleeve and a third-stage sleeve from inside to outside.

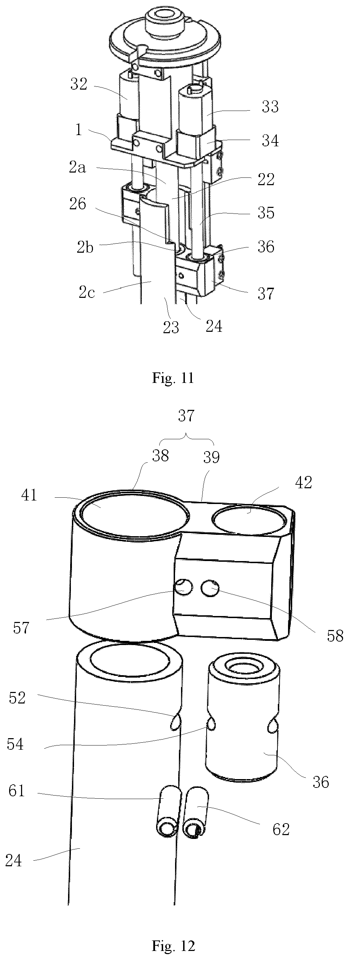

In order to prevent the pickup apparatuses 21 disposed in a mutually sleeving way from interfering in the extension and retraction process, referring to Fig. 11, in some embodiments, in the two pickup apparatuses 21 which are adjacent to each other and are both telescopic, the sleeve 24 of the pickup apparatus 21 located outside is provided with an avoidance opening 26 to avoid the extension and retraction of the pickup apparatus 21 located inside.

The pickup apparatuses 21 may be all movably disposed on the mounting seat 1, or only part of the pickup apparatuses 21 may be movably disposed on the mounting seat 1 and the other part of the pickup apparatuses 21 may be fixedly disposed on the mounting seat 1.

For example, referring to Figs. 7-9, in some embodiments, the aforementioned at least two pickup apparatuses 21 include a first pickup apparatus 22 and at least one second pickup apparatus 23. The first pickup apparatus 22 is fixedly disposed, and the at least one second pickup apparatus 23 sleeves outside the first pickup apparatus 22 and is telescopic relative to the first pickup apparatus 22. In this case, the driving mechanism 3 is in driving connection with the at least one second pickup apparatus 23, and drives the at least one second pickup apparatus 23 to extend and retract, so that the at least one second pickup apparatus 23 and the first pickup apparatus 22 pick up the articles in a switching way. In this case, the innermost pickup apparatus 21 which is fixedly disposed is called the first pickup apparatus 22. This first pickup apparatus 22 does not move relative to the mounting seat 1, and remains stationary. Each pickup apparatus 21 sleeving outside the first pickup apparatus 22 is called the second pickup apparatus 23. The second pickup apparatuses 23 are movably relative to the mounting seat 1, so that the second pickup apparatuses 23 can extend and retract. Since the first pickup apparatus 22 is unmovable, the structure is simpler, the control is more convenient, and the replacement efficiency is higher, so that the end pickup device 20 realizes quick replacement of the pickup parts based on a simpler structure.

The number of the second pickup apparatuses 23 may be one, two or more. When the pickup mechanism 2 includes at least two second pickup apparatuses 23, the pickup mechanism 2 includes at least three pickup apparatuses 21, which can realize quick replacement of multiple stages of pickup apparatuses 21, thereby different pickup requirements being more efficiently and flexibly met.

As one embodiment of the driving mechanism 3, referring to Figs. 7-11, in some embodiments, the driving mechanism 3 includes a driving devices 31 corresponding to the at least one second pickup apparatuses 23 one to one. The driving device 31 is in driving connection with the second pickup apparatus 23 to drive the second pickup apparatus 23 to extend and retract. Each second pickup apparatus 23 is equipped with one separate driving device 31, which is convenient to realize independent control over the extension and retraction process of each second pickup apparatus 23.

As shown in Figs. 7 and 11, in some embodiments, the driving device 31 includes a lead screw motor 32, and the lead screw motor 32 is in driving connection with the second pickup apparatus 23.

The lead screw motor 32 is a mechanism which converts rotary movement of the motor into linear movement based on cooperation between a lead screw and a nut. As shown in Fig. 11, the lead screw motor 32 includes a motor 33, a lead screw 35 and a nut 36. The motor 33 is in driving connection with the lead screw 35, and the nut 36 sleeves outside the lead screw 35. When the motor 33 rotates, the nut 36 moves along an axial direction of the lead screw 35 under constraint, which realizes a conversion from the rotary movement to the linear movement. As shown in Fig. 11, in some embodiments, a reducer 34 is disposed between the motor 33 and the lead screw 35, and the motor 33 is in driving connection with the lead screw 35 through the reducer 34. In this case, the motor 33 may be a direct current motor, and the lead screw motor 32 may be a direct current deceleration lead screw motor. Alternatively, in some other embodiments, the reducer 34 may not be disposed between the motor 33 and the lead screw 35, and the motor 33 and the lead screw 35 are directly in driving connection. In this case, the motor 33 may be a stepping motor, and the lead screw motor 32 may be a lead screw stepping motor.

The lead screw motor 32 can realize a linear movement, therefore, when being in driving connection with the second pickup apparatus 23, the lead screw motor 32 can drive the second pickup apparatus 23 to move along a straight line, and realize extension and retraction of the second pickup apparatus 23.

When in driving connection with the second pickup apparatus 23, the lead screw motor 32 is in driving connection with the second pickup apparatus 23 through the nut 36 thereof. For example, referring to Fig. 11, in some embodiments, the driving device 31 further includes a nut seat 37, and the nut seat 37 connects the nut 36 of the lead screw motor 32 with the sleeve 24 of the second pickup apparatus 23 to realize the driving connection between the lead screw motor 32 and the second pickup apparatus 23. The nut seat 37 restricts rotation of the nut 36 and realizes power transmission between the nut 36 and the second pickup apparatus 23, so that when moving linearly, the nut 36 can drive the second pickup apparatus 23 to move linearly to realize the extension and retraction of the second pickup apparatus 23.

As a structural form of the nut seat 37, referring to Figs. 12-13, in some embodiments, the nut seat 37 includes a first connecting part 38 and a second connecting part 39 connected with each other. The nut seat 37 is connected with the second pickup apparatus 23 through the first connecting part 38 and is connected with the nut 36 through the second connecting part 39. As an example, a connection between the first connecting part 38 and the second pickup apparatus 23 is realized by a first pin shaft 61 or by clamping. As an example, a connection between the second connecting part 39 and the nut 36 is realized by a second pin shaft 62.

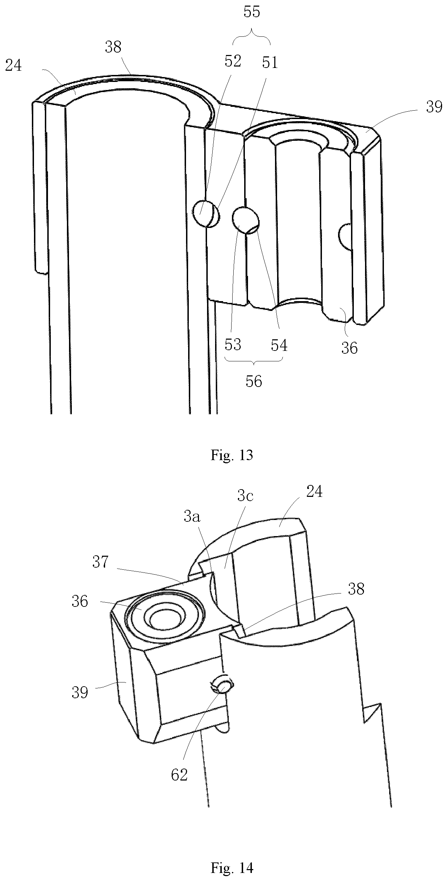

As one embodiment of realizing a fixed connection between the first connecting part 38 and the second pickup apparatus 23 based on the first pin shaft 61, referring to Figs. 12-13, in some embodiments, the first connecting part 38 is provided with a first cavity 41 therein, the sleeve 24 is located in the first cavity 41, and the first connecting part 38 and the sleeve 24 are connected through the first pin shaft 61. Specifically, as can be seen from Figs. 12 and 13, in some embodiments, a side wall of the first cavity 41 is provided with a first hole part 51, and an outer wall of the sleeve 24 is provided with a second hole part 52. The first hole part 51 and the second hole part 52 are butted to form a closed first pin hole 55, and the second connecting part 39 is provided with a first through hole 57 communicated with the first pin hole 55. The first pin shaft 61 penetrates the first through hole 57 and is inserted into the first pin hole 55 to connect the sleeve 24 with the first connecting part 38. In this case, the first connecting part 38 and the sleeve 24 are connected by the first pin shaft 61, so that the nut seat 37 and the second pickup apparatus 23 cannot rotate or move relatively, which is convenient for the nut 36 to drive the second pickup apparatus 23 to move up and down through the nut seat 37. Such a way of connecting the nut seat 37 with the second pickup apparatus 23 by the first pin shaft 61 is especially suitable for the second pickup apparatus 23 located inside (for example, the second-stage pickup apparatus 2b).

As one embodiment of clamping connection between the first connecting part 38 and the second pickup apparatus 23, referring to Figs. 14-16, in some embodiments, the first connecting part 38 is connected with the sleeve 24 in a clamping way. For example, referring to Figs. 14-16, in some embodiments, the first connecting part 38 includes a clamping part 3a, a side wall of the sleeve 24 is provided with a clamping groove 3c, the clamping part 3a is clamped in the clamping groove 3c, and a displacement of the clamping part 3a toward a radial outer side of the sleeve 24 and along the axial direction of the sleeve 24 is limited by the clamping groove 3c. Moreover, the second pin shaft 62 connecting the second connecting part 39 with the nut 36 abuts against the outer wall of the sleeve 24 to limit a displacement of the nut seat 37 toward a radial inner side of the sleeve 24. In this way, under actions of the clamping part 3a, the clamping groove 3c and the second pin shaft 62, the nut seat 37 and the second pickup apparatus 23 cannot rotate or move relatively, which is convenient for the nut 36 to drive the second pickup apparatus 23 to move up and down through the nut seat 37. Such a way of clamping connection between the first connecting part 38 and the second pickup apparatus 23 is particularly suitable for the second pickup apparatus 23 located outside (for example, the third-stage pickup apparatus 2c).

In addition, as one embodiment of realizing a fixed connection between the nut seat 37 and the nut 36 based on the second pin shaft 62, referring to Figs. 12-16, in some embodiments, a second cavity 42 is disposed in the second connecting part 39, the nut 36 is located in the second cavity 42, and the second connecting part 39 and the nut 36 are connected through the second pin shaft 62. Specifically, as shown in Figs. 12-13 and 16, in some embodiments, a side wall of the second cavity 42 is provided with a third hole part 53, and an outer wall of the nut 36 is provided with a fourth hole part 54. The third hole part 53 and the fourth hole part 54 are butted to form a closed second pin hole 56. Moreover, the second connecting part 39 is provided with a second through hole 58 communicated with the second pin hole 56, and the second pin shaft 62 penetrates the second through hole 58 and is inserted into the second pin hole 56 to connect the nut 36 with the second connecting part 39. Based on this, the nut seat 37 and the nut 36 cannot rotate or move relatively, and the nut seat 37 restricts the rotation of the nut 36, so that when the motor 33 drives the lead screw 35 to rotate, the nut 36 does not rotate, but only moves along the axial direction of the lead screw 35, which is convenient for the nut 36 to drive the second pickup apparatus 23 to move along the axial direction of the lead screw 35 through the nut seat 37, so as to realize extension and retraction of the second pickup apparatus 23.

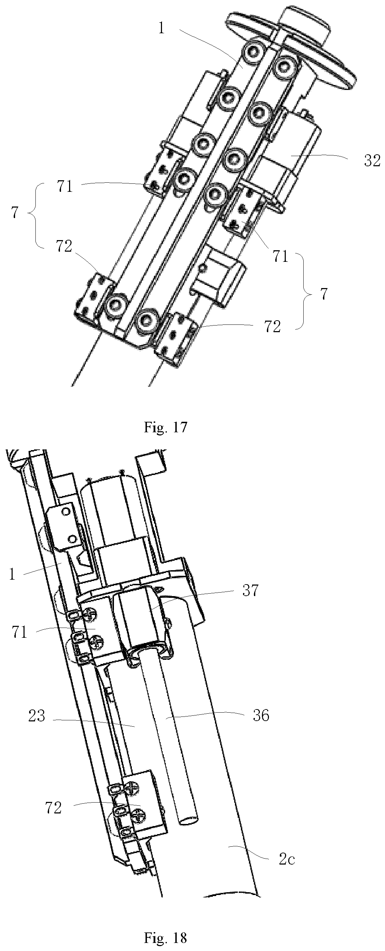

In addition, in order to enable the pickup apparatus 21 to extend and retract in a desired region more accurately, referring to Figs. 17-21, in some embodiments, the end pickup device 20 includes a limiting device 7, and the limiting device 7 is disposed on the mounting seat 1 and limits a displacement of the pickup apparatus 21. For example, in some embodiments, the limiting device 7 includes a first limiting switch 71 and a second limiting switch 72, and the first limiting switch 71 and the second limiting switch 72 are sequentially disposed along an extending direction of the pickup apparatus 21. The first limiting switch 71 limits a retracting displacement of the pickup apparatus 21, and the second limiting switch 72 limits an extending displacement of the pickup apparatus 21. In this way, an extending and retracting range of the pickup apparatus 21 is limited to prevent the pickup apparatus 21 from extending and retracting excessively. The first limiting switch 71 and the second limiting switch 72 may be various types of switches such as micro-switches or proximity switches. When the switches are triggered, the driving mechanism 3 stops working, so that the pickup apparatus 21 does not continue to extend or retract any more, thereby limiting the extending and retracting displacements.

In the above respective embodiments, the pickup part 2d is not limited in type, and, for example, the pickup part 2d may include a suction cup 25, a mechanical claw or a magnetic member, etc. Next, the end pickup device 20 of the embodiments of the present application will be further described by taking the case where the pickup part 2d is the suction cup 25 as an example.

Figs. 7-21 schematically show a case where the pickup part 2d is the suction cup 25.

As shown in Figs. 7-21, in the present embodiment, the end pickup device 20 includes a mounting seat 1, a pickup mechanism 2, a driving mechanism 3 and a limiting device 7. The pickup mechanism 2, the driving mechanism 3 and the limiting device 7 are all disposed on the mounting seat 1.

The pickup mechanism 2 includes three stages of pickup apparatuses 21 disposed in a sequentially sleeving way from inside to outside, which are respectively a first-stage pickup apparatus 2a located at the innermost part and fixedly disposed, a second-stage pickup apparatus 2b disposed outside the first-stage pickup apparatus 2a in a sleeving way and movably disposed relative to the mounting seat 1, and a third-stage pickup apparatus 2c disposed outside the second-stage pickup apparatus 2b in a sleeving way and movably disposed relative to the mounting seat 1. Each of the first-stage pickup apparatus 2a, the second-stage pickup apparatus 2b and the third-stage pickup apparatus 2c includes a sleeve 24 and a suction cup 25. The suction cup 25 is disposed at an end part of the sleeve 24 and serves as the pickup part 2d to pick up articles. The suction cups 25 of the first-stage pickup apparatus 2a, the second-stage pickup apparatus 2b and the third-stage pickup apparatus 2c may be called a first-stage suction cup, a second-stage suction cup and a third-stage suction cups in sequence.

When vacuumized, the suction cup 25 adsorbs the article to realize pickup of the article. As shown in Fig. 7, in the present embodiment, an air flow passage 27 is disposed inside the first-stage pickup apparatus 2a, and the first-stage pickup apparatus 2a, the second-stage pickup apparatus 2b and the third-stage pickup apparatus 2c are in gas communication with a vacuumizing mechanism through the air flow passage 27, so that the vacuumizing mechanism can vacuumize the suction cups 25 of respective stages of pickup apparatuses 21. In this case, in the pickup apparatuses 21, the pickup apparatuses 21 located outside are in communication with the vacuumizing mechanism through the pickup apparatuses 21 located inside. The suction cup 25 is an elastic member and may be deformed due to an influence of negative pressure or pressure exerted by the article in a working process. In order to enable the suction cups 25 of respective stages of pickup apparatuses 21 to provide a relatively sufficient adsorption force, each stage of pickup apparatus 21 may be disposed in such a way that, when one pickup apparatus 21 executes the pickup task and is in the compression limit, a tail end of the suction cup 25 of the pickup apparatus 21 is still lower than a tail end of the suction cup 25 located inside the pickup apparatus 21, so that the suction cup 25 located inside cannot be in contact with the article. In this way, an air path of the current suction cup 25 will not be blocked by the article on the suction cup 25 of the previous stage, so that the current suction cup 25 can have a larger vacuum generation area and provide a larger adsorption force. For example, when the third-stage pickup apparatus 2c executes a pickup task, even if the third-stage suction cup is compressed to the maximum compression amount, the tail end of the third-stage suction cup is still located below the tail end of the second-stage suction cup, so that the second-stage suction cup is not in contact with the article, and the first-stage suction cup 25 also does not come into contact with the article. In this way, the gas path of the third-stage suction cup will not be blocked by the article adsorbed on the second-stage suction cup, so that the vacuum generation area is larger and a provided adsorption force is larger.

The sleeving relationship of respective stages of pickup apparatuses 21 is as shown in Fig. 7. In the present embodiment, from inside to outside, the specifications of the suction cups 25 increase in sequence, that is, from inside to outside, cross-sectional areas of the suction cups 25 increase in sequence, that is to say, an adsorption area of the third-stage suction cup is larger than that of the second-stage suction cup, and an adsorption area of the second-stage suction cup is larger than that of the first-stage suction cup. Therefore, the third-stage suction cup is the largest, has the strongest adsorption capacity, and can adsorb the largest articles, followed by the second-stage suction cup, and the first-stage suction cup is the smallest, has the weakest adsorption capacity and can adsorb the smallest articles.

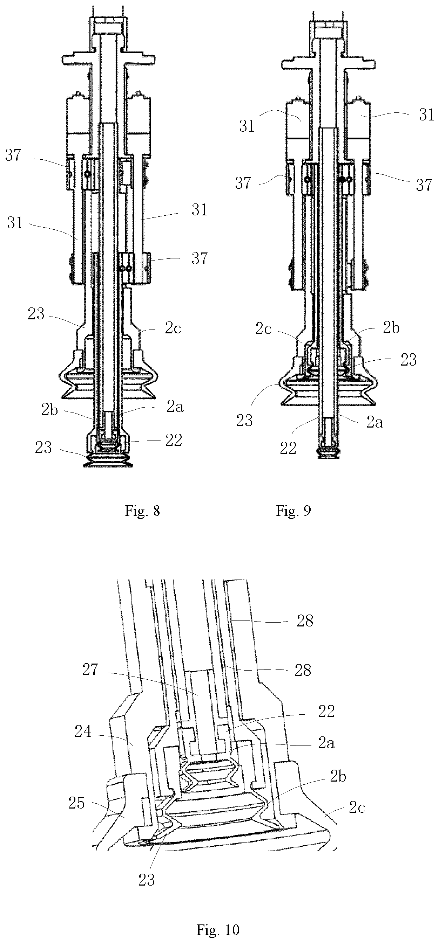

Referring to Fig. 10, in order to facilitate the relative extension and retraction of the pickup apparatuses 21, in the present embodiment, a guide sleeve 28 is disposed between two adjacent pickup apparatuses 21 inside and outside to play a guiding role. Moreover, in the present embodiment, the guide sleeve 28 also has a sealing function to play a sealing role and prevent gas leakage, so that the suction cup 25 can more reliably adsorb the articles. Specifically, as can be seen from Fig. 10, in the present embodiment, one guide sleeve 28 is disposed between the third-stage pickup apparatus 2c and the second-stage pickup apparatus 2b, and one guide sleeve 28 is disposed between the second-stage pickup apparatus 2b and the first-stage pickup apparatus 2a, wherein the guide sleeves 28 both play guiding and sealing roles. The guide sleeve 28 may be disposed between the sleeves 24 of two adjacent stages of pickup apparatuses 21.

The driving mechanism 3 is in driving connection with the second-stage pickup apparatus 2b and the third-stage pickup apparatus 2c, so as to drive the second-stage pickup apparatus 2b and the third-stage pickup apparatus 2c to move relative to the mounting seat 1, thereby realizing relative extension and retraction between the three stages of pickup apparatuses 21. As shown in Figs. 7-9 and 11, in the present embodiment, the driving mechanism 3 includes two driving devices 31 disposed on the mounting seat 1, the two driving devices 31 are arranged on both sides of a central axis of the sleeve 24, and are respectively in driving connection with the second-stage pickup apparatus 2b and the third-stage pickup apparatus 2c in one-to-one correspondence to drive the second-stage pickup apparatus 2b and the third-stage pickup apparatus 2c to extend and retract respectively. In Fig. 7, the driving device 31 on the left side is in driving connection with the third-stage pickup apparatus 2c for driving the third-stage pickup apparatus 2c to move up and down, so as to realize extension and retraction of the third-stage pickup apparatus 2c. The driving device 31 on the right side is in driving connection with the second-stage pickup apparatus 2b for driving the second-stage pickup apparatus 2b to move up and down, so as to realize extension and retraction of the second-stage pickup apparatus 2b.

As shown in Fig. 11, in the present embodiment, each of the two driving devices 31 includes a lead screw motor 32 and a nut seat 37. The lead screw motor 32 is in driving connection with the sleeve 24 through the nut seat 37, so that the sleeve 24 can move along the axial direction of the sleeve 24 under driving of the lead screw motor 32, to realize extension and retraction of the pickup apparatus 21.

Specifically, the lead screw motor 32 is a direct current deceleration lead screw motor, and includes a motor 33 which is a direct current motor, a reducer 34, a lead screw 35 and a nut 36. The motor 33 is connected with the lead screw 35 through the reducer 34. The axial direction of the lead screw 35 is consistent with the axial direction of the sleeve 24. The nut 36 sleeves the lead screw 35. The nut seat 37 sleeves outside the nut 36, and connects the nut 36 with the sleeve 24, so that the nut 36 can drive the sleeve 24 to move along the axial direction of the lead screw 35, thereby realizing extension and retraction of the pickup apparatus 21.

As shown in Figs. 12-16, in the present embodiment, the nut seat 37 corresponding to the third-stage pickup apparatus 2c and the nut seat 37 corresponding to the second-stage pickup apparatus 2b have different structures. For convenience of distinction, the nut seat 37 connected with the second-stage pickup apparatus 2b is called a first nut seat, and the nut seat 37 connected with the third-stage pickup apparatus 2c is called a second nut seat.

Figs. 12-13 show a structure of the first nut seat and a cooperation relationship between the first nut seat and the nut 36 and the sleeve 24. As shown in Figs. 12-13, in the present embodiment, the first nut seat sleeves the nut 36 and the sleeve 24 of the second-stage pickup apparatus 2b (i.e. the second-stage sleeve), and is connected with the second-stage sleeve and the nut 36 through a first pin shaft 61 and a second pin shaft 62 respectively, so that when the motor 33 drives the lead screw 35 to rotate, the nut 36 will not rotate, but will only drive the second-stage sleeve to move along the axial direction of the lead screw 35, thereby driving the second-stage pickup apparatus 2b to extend and retract.

The first nut seat includes a first connecting part 38 and a second connecting part 39 connected to one side of the first connecting part 38. A first cavity 41 is disposed in the first connecting part 38, and the second-stage sleeve is located in the first cavity 41, so that the first connecting part 38 sleeves outside the second-stage sleeve. A second cavity 42 is disposed in the second connecting part 39, and the nut 36 is located in the second cavity 42, so that the second connecting part 39 sleeves outside the nut 36. An inner wall of a part of the first connecting part 38 connected with the second connecting part 39 is provided with a first hole part 51, and an outer wall of the second-stage sleeve is provided with a second hole part 52. The first hole part 51 and the second hole part 52 are butted to form a closed first pin hole 55. An inner wall of the second connecting part 39 is provided with a third hole part 53, and an outer wall of the nut 36 is provided with a fourth hole part 54. The third hole part 53 and the fourth hole part 54 are butted to form a closed second pin hole 56. Meanwhile, the second connecting part 39 is provided with a first through hole 57 communicated with the first pin hole 55 and a second through hole 58 communicated with the second pin hole 56. The first pin shaft 61 penetrates the first through hole 57 and is inserted into the first pin hole 55 to connect the second-stage sleeve with the first connecting part 38, so that the nut seat 37 and the second-stage sleeve cannot rotate or move relatively. The second pin shaft 62 penetrates the second through hole 58 and is inserted into the second pin hole 56 to connect the nut 36 with the second connecting part 39, so that the nut seat 37 and the nut 36 cannot rotate or move relatively.

In this way, under the actions of the first pin shaft 61 and the second pin shaft 62, the nut 36 is fixedly disposed on the first nut seat, the first nut seat is fixedly disposed on the second-stage sleeve, and the nut 36 can drive the second-stage pickup apparatus 2b to move along the axial direction of the lead screw 35, to realize extension and retraction of the second-stage pickup apparatus 2b.

Figs. 14-16 show a structure of the second nut seat and a cooperation relationship between the second nut seat and the nut 36 and the sleeve 24. As shown in Figs. 14-16, in the present embodiment, the second nut seat sleeves the nut 36 and is connected with the nut 36 through the second pin shaft 62. At the same time, the second nut is connected with the sleeve 24 (that is, the third-stage sleeve) of the third-stage pickup apparatus 2c in a clamping way, so that when the motor 33 drives the lead screw 35 to rotate, the nut 36 will not rotate, but will only drive the third-stage sleeve to move along the axial direction of the lead screw 35, thereby driving the third-stage pickup apparatus 2c to extend and retract.

The second nut seat includes a first connecting part 38 and a second connecting part 39 connected to one side of the first connecting part 38. The first connecting part 38 includes a clamping part 3a, a side wall of the third-stage sleeve is provided with a clamping groove 3c, and the clamping part 3a is clamped in the clamping groove 3c to limit a displacement of the second nut seat in the axial and circumferential directions and toward the radial outer side relative to the third-stage sleeve. A second cavity 42 is disposed in the second connecting part 39, and the nut 36 is located in the second cavity 42, so that the second connecting part 39 sleeves outside the nut 36. The second pin shaft 62 connects the second connecting part 39 with the nut 36, and abuts against an outer wall of the third-stage sleeve, so as to realize fixed connection between the second connecting part 39 and the nut 36, and limit the displacement of the second nut seat toward the radial inner side relative to the third-stage sleeve.

Specifically, in a radial direction of the third-stage sleeve, one side of the clamping groove 3c facing the central axis of the third-stage sleeve is open, and one side facing away from the central axis of the third-stage sleeve is provided with two clamping platforms 3d. Along the axial direction of the third-stage sleeve, two ends of the clamping groove 3c are provided with end walls 3e, so that the two ends of the clamping groove 3c along the axial direction of the third-stage sleeve are at least partially closed. The clamping part 3a includes two clamping claws 3b, and the two clamping claws 3b are connected to two opposite sides of the second connecting part 39 in the circumferential direction of the third-stage sleeve. In the radial direction of the third-stage sleeve, the two clamping claws 3b are clamped with the two clamping platforms 3d in one-to-one correspondence, so that the clamping groove 3c can limit the displacement of the nut seat 37 toward the radial outer side of the third-stage sleeve. In the axial direction of the third-stage sleeve, the two clamping claws 3b are located between the upper and lower end walls 3e of the clamping groove 3c, so that the clamping groove 3 can limit the displacement of the nut seat 37 toward both axial sides of the third-stage sleeve and prevent the nut seat 37 from moving up and down. It can be seen that with cooperation of the clamping part 3a and the clamping groove 3c, the nut seat 37 cannot move toward to the radial outer side and the both axial sides of the third-stage sleeve relative to the third-stage sleeve.

The inner wall of the second connecting part 39 is provided with a third hole part 53, and the outer wall of the nut 36 is provided with a fourth hole part 54. The third hole part 53 and the fourth hole part 54 are butted to form a closed second pin hole 56. Meanwhile, the second connecting part 39 is provided with a second through hole 58 communicated with the second pin hole 56. The second pin shaft 62 penetrates the second through hole 58 and is inserted into the second pin hole 56 to connect the nut 36 with the second connecting part 39, so that the nut seat 37 and the nut 36 cannot rotate or move relatively. Moreover, the second pin shaft 62 abuts against the outer side wall of the third-stage sleeve, so that the nut seat 37 cannot move toward the radial inner side of the third-stage sleeve.

In this way, with cooperation of the second pin shaft 62 with the clamping part 3a and the clamping groove 3c, the nut 36 is fixedly disposed on the second nut seat, the second nut seat is fixedly disposed on the third-stage sleeve, and the nut 36 can drive the third-stage pickup apparatus 2c to move along the axial direction of the lead screw 35, so as to realize extension and retraction of the third-stage pickup apparatus 2c.

It can be seen that in the present embodiment, connection modes between the first nut seat and the nut 36 and between the second nut seat and the nut 36 are the same, wherein the second connecting part 39 and the nut 36 which are disposed in a mutually sleeving way are connected by the second pin shaft 62. However, connection modes between the first nut seat and the second nut seat and the sleeve 24 are different, wherein the first nut seat and the second-stage sleeve are disposed in a sleeving way and connected by the first pin shaft 61, while the second nut seat and the third-stage sleeve are connected in a clamping way instead of being disposed in a sleeving way and connected by the first pin shaft 61.

A connection between the nut seat 37 and the nut 36 is realized by cooperation of the second pin shaft 62, the third hole part 53 and the fourth hole part 54, and a connection between the first nut seat and the second-stage sleeve is realized by cooperation of the first pin shaft 61, the first hole part 51 and the second hole part 52. Compared with other connection modes such as bonding, screw connection or clamping connection, the structure is simpler, the layout is more compact, the adaptability to a narrow space is stronger and requirements on the machining accuracy are lower. The first pin hole 55 and the second pin hole 56 are configured to be formed by butting two hole parts (namely, the first hole part 51 and the second hole part 52, as well as the third hole part 53 and the fourth hole part 54) in two connected parts, which is more suitable for connection requirements of the nut seat 37 , the nut 36 and the sleeve 24 with a smaller wall thickness compared with the way of directly disposing complete pin holes in the connected parts.

The second nut seat and the third-stage sleeve are not connected in a sleeving way any more, but are connected in a clamping way by cooperation of the clamping groove 3c and the clamping part 3a, so that the reciprocating movement of the first nut seat can be avoided on the basis of realizing fixed connection between the second nut seat and the third-stage sleeve, which is convenient for the first nut seat and the second nut seat to move upward to the same height, so as to avoid the case that the sleeved first nut seat cannot move upward to an upper limit position of the second nut seat due to blocking of the second nut seat.

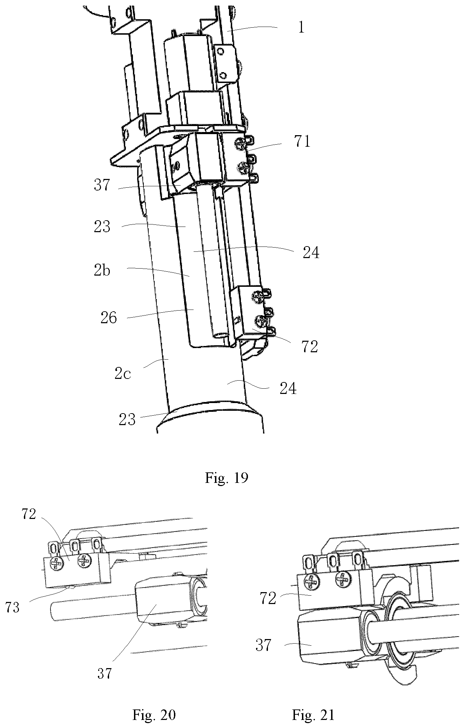

In addition, as shown in Figs. 11 and 19, in the present embodiment, the sleeve 24 of the third-stage pickup apparatus 2c is provided with an avoidance opening 26, and the avoidance opening 26 is disposed on a side surface of the sleeve 24 of the third-stage pickup apparatus 2c and located on a moving path of the second-stage pickup apparatus 2b, so that when the second-stage pickup apparatus 2b moves up and retracts, the avoidance opening 26 can just avoid the nut seat 37 (that is, the first nut seat) of the second-stage pickup apparatus 2b, to facilitate smooth extension and retraction of the second-stage pickup apparatus 2b.

The extending and retracting displacements of the pickup apparatus 21 are limited by the limiting device 7. The limiting device 7 is in one-to-one correspondence with the retractable pickup apparatus 21. In the present embodiment, referring to Fig. 17, the end pickup device 20 includes two limiting devices 7, and these two limiting devices 7 are in one-to-one correspondence with the second-stage pickup apparatus 2b and the third-stage pickup apparatus 2c, and are for limiting movement displacements of the second-stage pickup apparatus 2b and the third-stage pickup apparatus 2c respectively. In Fig. 14, the limiting device 7 on the right side corresponds to the third-stage pickup apparatus 2c for limiting the displacement of the third-stage pickup apparatus 2c; and the limiting device 7 on the left side corresponds to the second-stage pickup apparatus 2b for limiting the displacement of the second-stage pickup apparatus 2b.

As shown in Figs. 17-21, in the present embodiment, the two limiting devices 7 have the same structure, and both include a first limiting switch 71 and a second limiting switch 72, the first limiting switch 71 and the second limiting switch 72 are sequentially disposed along the extending direction of the pickup apparatus 21, the first limiting switch 71 limits a retracting displacement of the pickup apparatus 21, and the second limiting switch 72 limits an extending displacement of the pickup apparatus 21. In this way, referring to Figs. 20-21, after the lead screw motor 32 is activated, the corresponding stage of pickup apparatus 21 will start to move, and when moving in place, the corresponding nut seat 37 will be in contact with the limiting switch to compress a contact 73 of the limiting switch, so that the limiting switch is triggered and a signal is sent to control the lead screw motor 32 to stop working, then the lead screw motor 32 will not continue rotating along this direction, but will start to rotate in a reverse direction after receiving a reverse direction rotation signal, so that the corresponding stage of pickup apparatus 21 rotates in a reverse direction until the other limiting switch is touched, thereby realizing the limitation to bidirectional displacements.

Based on the above arrangement, the end pickup device 20 according to the present embodiment can realize local replacement of the suction cups 25, which is convenient and fast.

As shown in Fig. 7, at initial time, the first-stage pickup apparatus 2a, the second-stage pickup apparatus 2b and the third-stage pickup apparatus 2c are all in initial positions. At this time, the tail end of the suction cup 25 of the second-stage pickup apparatus 2b is lower than that of the suction cup 25 of the first-stage pickup apparatus 2a, and the tail end of the suction cup 25 of the third-stage pickup apparatus 2c is lower than that of the suction cup 25 of the second-stage pickup apparatus 2b, that is to say, from inside to outside, the tail ends of the suction cups 25 of respective stages of pickup apparatuses 21 are disposed downwards in sequence. In other words, from inside to outside, the tail ends of the suction cups 25 of respective stages of pickup apparatuses 21 are arranged at intervals in sequence along the extending direction. In this case, if it is necessary to perform the pickup task, only the suction cup 25 of the third-stage pickup apparatus 2c can be in contact with the article, while the suction cups 25 of the second-stage pickup apparatus 2b and the first-stage pickup apparatus 2a are not exposed and cannot be in contact with the article and cannot pick up the article. Therefore, it is suitable for picking up the larger article at this time.

When the article to be picked up is relatively small and unsuitable to be picked up by the suction cup 25 of the third-stage pickup apparatus 2c, but suitable to be picked up by the suction cup 25 of the second-stage pickup apparatus 2b, as shown in Fig. 8, a signal is sent to the lead screw motor 32 corresponding to the third-stage pickup apparatus 2c to control the lead screw motor 32 to drive the third-stage pickup apparatus 2c to move upward and retract, so that the third-stage pickup apparatus 2c is released from blocking the suction cup 25 of the second-stage pickup apparatus 2b, and the suction cup 25 of the second-stage pickup apparatus 2b is exposed. At this time, the suction cup 25 of the second-stage pickup apparatus 2b can be in contact with the article to pick up the article. As can be seen from Fig. 8, when only the third-stage pickup apparatus 2c is retracted in place, but the second-stage pickup apparatus 2b is not retracted, the nut seat 37 corresponding to the third-stage pickup apparatus 2c moves upward to the upper limit position, but the nut seat 37 corresponding to the second-stage pickup apparatus 2b does not move and is in the lower limit position.

When the article to be picked is smaller and neither of the suction cups 25 of the third-stage pickup apparatus 2c and the second-stage pickup apparatus 2b is suitable, as shown in Fig. 9, a signal is sent to the lead screw motors 32 to drive the third-stage pickup apparatus 2c and the second-stage pickup apparatus 2b to move up and retract, to expose the suction cup 25 of the first-stage pickup apparatus 2a, so that the suction cup 25 of the first-stage pickup apparatus 2a can adsorb the article and complete the pickup operation. As can be seen from Fig. 9, when the second-stage pickup apparatus 2b and the third-stage pickup apparatus 2c are both retracted in place, the nut seats 37 corresponding to them move upward to the upper limit position.

In this way, according to actual needs, the third-stage pickup apparatus 2c and the second-stage pickup apparatus 2b are controlled to move up and down, so that the suction cups 25 of respective stages of pickup apparatuses 21 are in contact with the articles in a switching way, to complete the replacement of the suction cups 25.

As can be seen, the end pickup device 20 according to the present embodiment is equipped with backup suction cups 25 itself, and can switch the current suction cup 25 and the backup suction cup 25. In other words, the end pickup device 20 according to the present embodiment has a suction cup replacement function itself, and can realize quick replacement of the suction cups 25 by using the relative extension and retraction of respective stages of pickup apparatuses 21. When the suction cup 25 needs to be replaced, after the placing ends, the end pickup device 20 according to the present embodiment only needs to control the pickup apparatus 21 located outside the required suction cup 25 to move up and retract, and then the required suction cup 25 can be switched to perform the next operation, thereby completing the switching process of the suction cup 25. The switching of the suction cups 25 can be completed in the necessary moving process after the placing action is completed, the ineffective process that the manipulator 10 specially moves from the working region A to the farther suction cup holder 8 to put down and replace the suction cup 25, and then returns to the working region A can be omitted, and the ineffective time consumed by the corresponding ineffective process is saved. Therefore, the replacement time for the suction cup can be greatly shortened, so that the end pickup device 20 can spend more time on the pickup operation, which improves use efficiency of the end pickup device 20 and increases an input-output ratio.

The embodiments shown in Figs. 7-21 are only described by taking the case of three stages of pickup apparatuses 21 as an example, but it should be understood that the number of stages of the pickup apparatuses 21 may be more, for example, four or more stages may be disposed.

In summary, according to the embodiments of the present application, by improving the structure of the end pickup device 20, ineffective actions in the replacement process of the pickup part are eliminated, a lot of time wasted in the replacement process of the pickup parts is greatly saved, and the working efficiency is effectively improved.

Based on the provided end pickup device 20, embodiments of the present application also provide a manipulator 10 and a robot 100 which include the end pickup device 20 according to the embodiments of the present application.

The foregoing is merely exemplary embodiments of the present application, and not intended to limit the present application. Any modifications, equivalent substitutions, improvements, etc., made within the spirit and principle of the present application shall be included in the protection scope of the present application.

## Claims

1. An end pickup device (20), comprising:
a mounting seat (1);
a pickup mechanism (2), disposed on the mounting seat (1) and comprising at least two pickup apparatuses (21), wherein the at least two pickup apparatuses (21) are movable relative to each other, and the pickup apparatus (21) comprises a pickup part (2d) for picking up articles; and
a driving mechanism (3), disposed on the mounting seat (1) and in driving connection with the pickup mechanism (2), wherein the driving mechanism (3) drives the at least two pickup apparatuses (21) to move relatively, so that the at least two pickup apparatuses (21) pick up the articles in a switching way.

2. The end pickup device (20) according to claim 1, wherein the pickup apparatus (21) further comprises a sleeve (24), the pickup part (2d) is disposed at an end part of the sleeve (24), the at least two pickup apparatuses (21) are disposed in a sequentially sleeving way and are relatively telescopic, and the driving mechanism (3) drives the at least two pickup apparatuses (21) to extend and retract relatively, so that the at least two pickup apparatuses (21) pick up the articles in a switching way.

3. The end pickup device (20) according to claim 2, wherein the at least two pickup apparatuses (21) comprise a first pickup apparatus (22) and at least one second pickup apparatus (23), the first pickup apparatus (22) is fixedly disposed, the at least one second pickup apparatus (23) sleeves outside the first pickup apparatus (22) and is telescopic relative to the first pickup apparatus (22), and the driving mechanism (3) is in driving connection with the at least one second pickup apparatus (23) and drives the at least one second pickup apparatus (23) to extend and retract, so that the at least one second pickup apparatus (23) and the first pickup apparatus (22) pick up the articles in a switching way.

4. The end pickup device (20) according to claim 3, wherein the at least two pickup apparatuses (21) comprise at least two second pickup apparatuses (23).

5. The end pickup device (20) according to claim 3 or 4, wherein the driving mechanism (3) comprises a driving device (31) corresponding to the at least one second pickup apparatus (23) one to one, and the driving device (31) is in driving connection with the second pickup apparatus (23) to drive the second pickup apparatus (23) to extend and retract.

6. The end pickup device (20) according to claim 5, wherein the driving device (31) comprises a lead screw motor (32), and the lead screw motor (32) is in driving connection with the second pickup apparatus (23).

7. The end pickup device (20) according to claim 6, wherein the driving device (31) further comprises a nut seat (37), and the nut seat (37) connects a nut (36) of the lead screw motor (32) with the sleeve (24) of the second pickup apparatus (23) to realize driving connection between the lead screw motor (32) and the second pickup apparatus (23).

8. The end pickup device (20) according to claim 7, wherein the nut seat (37) comprises a first connecting part (38) and a second connecting part (39) which are connected with each other, the first connecting part (38) and the sleeve (24) are connected through a first pin shaft (61), or the first connecting part (38) and the sleeve (24) are connected in a clamping way; and/or, the second connecting part (39) and the nut (36) are connected through a second pin shaft (62).

9. The end pickup device (20) according to claim 8, wherein,
a first cavity (41) is disposed in the first connecting part (38), the sleeve (24) is located in the first cavity (41), and the first connecting part (38) and the sleeve (24) are connected through the first pin shaft (61); or,
the first connecting part (38) comprises a clamping part (3a), a clamping groove (3c) is disposed in a side wall of the sleeve (24), the clamping part (3a) is clamped in the clamping groove (3c), a displacement of the clamping part (3a) towards a radial outer side of the sleeve (24) and along an axial direction of the sleeve (24) is limited by the clamping groove (3c), and the second pin shaft (62) connecting the second connecting part (39) with the nut (36) abuts against an outer wall of the sleeve (24) to limit a displacement of the nut seat (37) towards a radial inner side of the sleeve (24).

10. The end pickup device (20) according to claim 9, wherein a side wall of the first cavity (41) is provided with a first hole part (51), the outer wall of the sleeve (24) is provided with a second hole part (52), the first hole part (51) and the second hole part (52) are butted to form a closed first pin hole (55), the second connecting part (39) is provided with a first through hole (57) communicated with the first pin hole (55), and the first pin shaft (61) penetrates the first through hole (57) and is inserted into the first pin hole (55) to connect the sleeve (24) with the first connecting part (38).

11. The end pickup device (20) according to any one of claims 8-10, wherein a second cavity (42) is disposed in the second connecting part (39), the nut (36) is located in the second cavity (42), and the second connecting part (39) and the nut (36) are connected through the second pin shaft (62).

12. The end pickup device (20) according to claim 11, wherein a side wall of the second cavity (42) is provided with a third hole part (53), an outer wall of the nut (36) is provided with a fourth hole part (54), the third hole part (53) and the fourth hole part (54) are butted to form a closed second pin hole (56), the second connecting part (39) is provided with a second through hole (58) communicated with the second pin hole (56), and the second pin shaft (62) penetrates the second through hole (58) and is inserted into the second pin hole (56) to connect the nut (36) with the second connecting part (39).

13. The end pickup device (20) according to any one of claims 2-12, wherein in the two pickup apparatuses (21) which are adjacent to each other and are both telescopic, the sleeve (24) of the pickup apparatus (21) located outside is provided with an avoidance opening (26) to avoid the extending and retracting of the pickup apparatus (21) located inside.

14. The end pickup device (20) according to any one of claims 1-13, further comprising a limiting device (7) disposed on the mounting seat (1) to limit a displacement of the pickup apparatus (21).

15. The end pickup device (20) according to claim 14, wherein the limiting device (7) comprises a first limiting switch (71) and a second limiting switch (72), the first limiting switch (71) and the second limiting switch (72) are sequentially disposed along an extending direction of the pickup apparatus (21), the first limiting switch (71) limits a retracting displacement of the pickup apparatus (21), and the second limiting switch (72) limits an extending displacement of the pickup apparatus (21).

16. The end pickup device (20) according to any one of claims 1-15, wherein the pickup part (2d) comprises a suction cup (25).

17. A manipulator (10), comprising the end pickup device (20) according to any one of claims 1-16.

18. A robot (100), comprising the manipulator (10) according to claim 17.
